# EUROPÄISCHE PATENTSCHRIFT

(11) **EP 1 109 637 B1**
(45) Veröffentlichungstag und Bekanntmachung des Hinweises auf die Patenterteilung: **26.05.2004**
(21) Anmeldenummer: 99941604.3
(22) Anmeldetag: 12.08.1999
(51) Int. Cl.: B21H 3/02, F16B 25/00, F16B 33/00, F16B 33/06, C21D 9/00

(54) **SELBSTGEWINDEFORMENDE SCHRAUBE AUS LEICHTMETALL UND VERFAHREN ZU IHRER HERSTELLUNG**
LIGHT ALLOY THREAD-FORMING SCREW AND ITS PRODUCTION METHOD
VIS AUTOTARAUDEUSE EN ALLIAGE LEGER ET SON PROCEDE DE PRODUCTION

(30) Priorität: 04.09.1998 DE 19840298
(43) Veröffentlichungstag der Anmeldung: 27.06.2001
(73) Patentinhaber: EJOT VERBINDUNGSTECHNIK GmbH & Co. KG, 57334 Bad Laasphe (DE)
(72) Erfinder: FRIEDERICH, Heinrich, D-68649 Gross-Rohrheim (DE); RECK, Bernhard, D-35236 Breidenbach (DE)
(74) Vertreter: Eisenführ, Speiser & Partner
(86) Internationale Anmeldenummer: PCT/EP1999/005925
(87) Internationale Veröffentlichungsnummer: WO 2000/013817

(56) Entgegenhaltungen:
- EP-A- 0 863 220
- US-A- 4 431 354
- US-A- 4 730 970
- US-A- 5 755 542
- K. BANIZS: "HEAT TREATMENT OF HIGH-STRENGTH ALUMINUM SCREWS" MATERIAL SCIENCE FORUM, Bd. 13/14, 1987, Seiten 593-598, XP000677136 DIE SCHWEIZ
- W. HUFTNAGEL: "ALUMINUM TASCHENBUCH" 1983 , ALUMINUM-VERLAG , DÜSSELDORF XP002033949 SEITE 79, z.B. Ligierung AA 7009

## Beschreibung

Die Erfindung betrifft eine selbstgewindeformende Schraube aus einer warmaushärtbaren Leichtmetall-Legierung, deren Schaft mit einem Gewindeflanken aufweisenden Gewinde versehen ist. Die Erfindung betrifft außerdem ein Verfahren zum Herstellen solcher Schrauben.

Leichtmetalle zeichnen sich beispielsweise gegenüber Stahl und Eisen durch eine wesentlich geringere Dichte, also ein niedrigeres Gewicht pro Volumen aus. Daher werden Bauteile aus Leichtmetall überall dort eingesetzt, wo es gilt, Gewicht zu sparen, beispielsweise im Automobilbau. Viele Leichtmetallbauteile werden im Druckgußverfahren aus Aluminium-, Zink- oder Magnesiumlegierungen hergestellt. Werden derartige Bauteile mit den bekannten selbstgewindeformenden Schrauben aus Einsatz-, Vergütungs- oder Edelstählen verschraubt, führt dies zu Problemen. So kommt es im Unterkopfbereich einer Verschraubung von nicht oberflächenbeschichteten oder nicht nachbehandelten Bauteilen aus Magnesiumlegierungen mit Schrauben aus Einsatz-, Vergütungs- oder Edelstählen häufig zu Korrosionserscheinungen im Kontakt-Bereich, insbesondere dann, wenn die Verschraubung mit korrosiven Medien beaufschlagt wird. Die Ursache für eine derartige Kontaktkorrosion liegt in den stark unterschiedlichen elektrochemischen Ruhepotentialen der Leichtmetallbauteile und der Stahlschrauben. Die Kontaktkorrosion schränkt die Betriebssicherheit solcher Schraubverbindungen stark ein. Die Kontaktkorrosion läßt sich zwar durch den Einsatz von Schrauben aus Einsatz-, Vergütungs- oder Edelstählen mit speziellen Beschichtungssystemen vermindern, jedoch nie ganz vermeiden. Ein weiteres Problem bei einer Verschraubung von Leichtmetallbauteilen mit Stahlschrauben resultiert aus den unterschiedlichen Ausdehungskoeeffizienten von Leichtmetallen und Stählen. Der industrielle Einsatz von Magnesium-Bauteilen als solchen wird durch das Relaxationsverhalten dieses Werkstoffs bereits bei geringfügig erhöhten Temperaturen eingeschränkt. Werden beim Verschrauben solcher Bauteile Stahlschrauben verwendet, führen die unterschiedlichen thermischen Ausdehnungskoeffizienten der Werkstoffe im Falle von Temperaturänderungen zu starken Änderungen der Vorspannkraft der Verschraubung. Dies schränkt den industriellen Einsatz von Magnesiumbauteilen weiter ein.

Ziel der vorliegenden Erfindung ist es, die beim Stand der Technik auftretenden Nachteile möglichst weitgehend zu vermeiden.

Erfindungsgemäß wird dieses Ziel mit einer selbstgewindeformenden Schraube der eingangs genannten Art mit einer gewindeformenden und ggf. lochbildenden Spitze am einen Ende erreicht, deren Gefüge dem Werkstoff eine besonders große Festigkeit verleiht, während der Schraubenwerkstoff ansonsten ein Gefüge besitzt, das ihm eine besonders hohe Korrosionsbeständigkeit verleiht.

Eine derartige Schraube kann zwei an sich widersprüchliche Eigenschaften in sich vereinen, nämlich in mindestens einem Teil die höchstmögliche Festigkeit besitzen, die der Werkstoff zulässt, und in einem anderen Teil die größtmögliche Korrosionsbeständigkeit des Werkstoffs besitzen. Die Erfindung beruht auf der Erkenntnis, dass Bauteile aus warmausgehärteten - insbesondere Cu-haltigen - Aluminiumlegierungen im Wärmebehandlungszustand höchster Festigkeit zur Anfälligkeit gegenüber Spannungs-Riß-Korrosion neigen. Dieser Effekt ist auf die Bildung von kohärenten und inkohärenten Ausscheidungen auch im Bereich der Komgrenzflächen während des Warmauslagems bzw. der Ausscheidungsbehandlung zurückzuführen. Es kann dadurch zu interkristalliner Korrosion kommen.

Aus der US 5,755,542 A ist zwar ein schraubenförmiger Befestiger bekannt, der - obwohl einstückig aus demselben Grundmaterial hergestellt - über seine Länge Zonen unterschiedlicher Materialbeschaffenheit aufweist. Allerdings muss es sich, ohne dass dies dort ausdrücklich zum Ausdruck kommt, bei dem Grundmaterial um Stahl handeln; Leichtmetall könnte niemals eine Rockwell-Härte von mindestens 50 HRC erreichen; bei Leichtmetall ist eine größere Härte als rund 30 HRC praktisch nicht erzielbar. Der größeren Härte im Bereich der Schraubenspitze steht im übrigen Bereich größere Weichheit gegenüber, damit es im endgültigen Einschraubzustand zu einem satten Kontakt der Schraubengänge mit dem Umgebungsmaterial des Bauteils kommt. Demgegenüber sieht die Erfindung vor, den übrigen Bereich der aus Leichtmetall bestehenden Schraube nach größtmöglicher Korrosionsbeständigkeit auszurichten.

Das erfindungsgemäß differenzierte Gefüge des Schraubenwerkstoffs in verschiedenen Teilabschnitten der Schraube läßt sich beispielsweise durch eine abschnittsweise differenzierte Wärmebehandlung der Schraube erzielen. Es ist aber auch möglich, das Gefüge des Schraubenwerkstoffs durch mechanische Umformung zu verändern. Diese mechanische Umformung kann ebenfalls auf einen Teil der Schraube beschränkt sein. Genausogut kann die mechanische Umformung nach der Wärme-behandlung, etwa im Anschluß an ein Warmauslagern geschehen. Die mechanische Umformung könnte dann beispielsweise im Rollen des Gewindes der Schraube bestehen.

Vorzugsweise ist der Schraubenwerkstoff zumindest teilweise eine Aluminium-Knet-Legierung, die neben Aluminium die folgenden Bestandteile in den angegebenen Konzentrationen enthält:

| | |
|---|---|
| Silizium | 0,1 bis 0,5% |
| Eisen | 0 bis 0,5% |
| Kupfer | 0,5 bis 2,5% |
| Mangan | 0,1 bis 0,4% |
| Magnesium | 2,0 bis 3,9% |
| Chrom | 0 bis 0,3% |
| Zink | 4,0 bis 8,5% |
| Titan | 0 bis 0,2% |
| Zirkonium | 0 bis 0,25%. |

Werden Leichtmetallbauteile, beispielsweise Magnesiumbauteile mit erfindungsgemäßen Schrauben verschraubt, treten die eingangs beschriebenen Probleme nicht auf, da Magnesium und Aluminium im Temperaturbereich von 20 bis 100°C einen nahezu gleichen thermischen Ausdehnungskoeffizienten von 27 mal 10⁻⁶ pro K⁻¹ (Magnesium) bzw. 23,6 mal 10⁻⁶ K⁻¹ (Aluminium) haben. Auch die Korrosionspotentiale der beiden Metalle sind ähnlich, nämlich -1,67 Volt bei Magnesium und -0,83 Volt bei Aluminium.

Schrauben aus der genannten Aluminiumknetlegierung können darüber hinaus eine weitere Anforderung erfüllen, nämlich die nach einer ausreichend großen Gewindeflankenhärte. Eine hohe Gewindeflankenhärte ist Voraussetzung dafür, daß sich eine Schraube ihr Gewinde in einem Bauteil selbst formen kann, so daß der ansonsten erforderliche Bearbeitungsschritt des Gewindeschneidens in dem Bauteil entfällt. Erst dadurch ist es möglich, daß Aluminiumschrauben als selbstgewindeformende Schrauben mit solchen aus Stahl auch hinsichtlich der Fertigungskosten konkurrieren können.

Bevorzugt werden selbstgewindeformende Schrauben der vorgenannten Art, bei denen zumindest die Gewindeflanken der Schraube anodisch oxidiert sind und entsprechende Oxydschichten aufweisen. Durch eine Oxydschicht wird die Oberflächenhärte der Schraube erheblich gesteigtert und trägt damit maßgeblich dazu bei, daß eine solche Schraube als selbstgewindeformende Schraube verwendet werden kann. Bei geringen Härten oder Festigkeiten der zu verschraubenden Materialien reicht eine Gleitbeschichtung der Schraubenoberfläche aus, um das Formen des Gegengewindes sicherzustellen. Bei erhöhten Anforderungen verbessert eine hartanodisierte Schicht die Einschraubeigenschaften.

Vorzugsweise sind die Oxydschichten bei der genannten Schraube mit reibmindernden Imprägnierungen beispielsweise Teflonimprägnierungen versehen. Durch derartige Imprägnierungen kann die Reibung zwischen der Schraubenoberfläche und dem Bauteil, in das die Schraube eingeschraubt wird, erheblich gesenkt werden. Entsprechend sinken die auf die Schraube wirkenden Kräfte, so daß die Schraube weniger beansprucht wird. Umgekehrt heißt dies, daß die Schraube auch dort noch eingesetzt werden kann, wo die Festigkeit des Schraubenwerkstoffs bei unverminderter Reibung nicht ausreichen würde.

Die Schraube ist außerdem vorzugsweise zumindest an ihren Gewindeflanken gleitbeschichtet. Durch eine derartige Gleitbeschichtung können die vorgenannten Reibungskräfte weiter vermindert werden, so daß die vorgenannten Vorteile noch gesteigert werden. Prinzipiell können selbstgewindeformende Aluminiumschrauben mit verschiedenen Geometrien hergestellt werden, die an die unterschiedlichen Einsatzzwecke angepaßt sind und sich allgemein für selbstgewindeformende Schrauben eignen.

Bevorzugt werden solche Schrauben, deren Gewinde an den Gewindeflanken Vorsprünge aufweisen, die über den Außendurchmesser des Gewindes hinausragen.

Diese Vorsprünge sind vorzugsweise so angeordnet, daß sich mindestens eine helixartig um den Schaft der Schraube umlaufende Linie ergibt, an der die Vorsprünge ausgerichtet sind. Bei einer Schraube mit einer bestimmten Gewindesteigung besitzt die helixartig um den Schaft umlaufende Linie vorzugsweise eine Steigung, die wesentlich größer als die Steigung des Gewindes ist. Schrauben mit einer derartigen Geometrie sind zwar als solche schon aus der deutschen Patentschrift 27 03 433 bekannt, nicht jedoch als Schrauben aus einer Aluminiumknetlegierung. Experimente haben gezeigt, daß mit derartig geformten Aluminiumschrauben gute Verschraubungsergebnisse zu erzielen sind.

Das Ziel der Erfindung wird auch mit einem Verfahren zum Herstellen einer erfindungsgemäßen Schraube erreicht, welches die folgenden Verfahrensschritte umfaßt:
- Formgebung der Schraube durch Walzen oder spanendes Erzeugen der Gewindegeometrie,
- Lösungsglühen der Schraube,
- Abschrecken der Schraube in Wasser und
- Warmauslagern der Schraube, bei dem die Schraube in verschiedenen Teilabschnitten unterschiedlich wärmebehandelt wird.

Eine abschnittsweise Wärmebehandlung beim Warmauslagern der Schraube macht es möglich, ein unterschiedliches Gefüge des Schraubenwerkstoffs in den verschiedenen Teilabschnitten der Schraube gezielt einzustellen. Eine derart gezielte Einstellung unterschiedlicher Eigenschaften über die Schraubenlänge ist mittels der herkömmlichen Wärmebehandlung in einer Ofenanlage kaum möglich, da sich in einer derartigen Ofenanlage naturgemäß in der gesamten Schraube homogene Temperaturen einstellen, die zu entsprechend homogenen Eigenschaften über die Länge und den Querschnitt der Schraube führen.

Mittels der induktiven Erwärmung von Schrauben können jedoch in einzelnen Teilabschnitten der Schraube unterschiedliche Temperaturen eingestellt werden. Dazu werden die Schrauben vereinzelt in Spulen, auch Induktoren genannt, erwärmt. In geeigneter Anordnung gelingt es, den Schraubenkopf und die die Vorspannkraft übertragende Gewindelänge einer Temperatur- und Zeit-Folge auszusetzen, die zur Einstellung eines Werkstoffzustandes höchster Korrosionsbeständigkeit führt, während gleichzeitig die dem Gewindeformen dienende Schraubenlänge im Bereich der Schraubenspitze einer abweichenden Temperaturund Zeit-Folge zur Erzielung einer maximal möglichen Werkstoffhärte ausgesetzt ist. Die jeweils optimalen Parameter (Temperatur, Zeit) für die Wärmebehandlung richten sich dabei nach der chemischen Zusammensetzung des Schraubenwerkstoffs.

Die Wärmebehandlung der Schraube beim Warmauslagern wird für den Bereich des schraubenkopffernen Endes der Schraube vorzugsweise so durchgeführt, daß sich dort eine maximale Gefügehärte ergibt, d.h. daß dort der Schraubenwerkstoff ein Gefüge maximaler Härte annimmt. Weiterhin wird die differenzierte Wärmebehandlung der Schraube vorzugsweise so durchgeführt, daß die Schraube mit Ausnahme eines Bereiches an ihrem schraubenkopffernen Ende eine maximale Korrosionsbeständigkeit erhält.

Sollen die fertigen Schrauben einen Kopf aufweisen, schließt der Verfahrensschritt der Formgebung das Pressen einer Kopfgeometrie vor dem Walzen oder spanenden Erzeugen der Gewindegeometrie ein. Außerdem wird die Schraube vorzugsweise vor dem Lösungsglühen gebeizt. Das Lösungsglühen und Warmauslagern folgt in mehreren Stufen von unterschiedlicher Dauer bei unterschiedlichen Temperaturen. Durch eine derartige Behandlung können optimale Festigkeits- und Zähigkeitseigenschaften erzeugt werden. Temperaturen und Zeitdauern hängen dabei von der exakten Werkstoffzusammensetzung ab.

Bei einem bevorzugten Ausführungsbeispiel beträgt die Temperatur beim Lösungsglühen 460°C bis 520°C und besonders bevorzugt 470°C bis 480°C.

Bei einer bevorzugten Verfahrensvariante wird die Gewindegeometrie erst nach dem Warmauslagern durch Walzen oder spanende Bearbeitung erzeugt. Das bedeutet, daß bei dieser Verfahrensvariante die Formgebung der Schraube zunächst auf das Pressen der Kopfgeometrie beschränkt ist. Anschließend wird die Schraube gebeizt, lösungsgeglüht, abgeschreckt und warmausgelagert. Schließlich wird die Gewindegeometrie durch Walzen oder alternativ durch spanende Bearbeitung hergestellt. Dadurch wird eine höhere Festigkeit und Härte im Bereich der Gewindeflanken erzielt. Beim Walzen des Gewindes kommt es zu einer weiteren Gefügeveränderung des Schraubenwerkstoffs durch mechanische Umformung, die die Festigkeit des Gefüges im umgeformten Bereich erhöht.

Denkbar ist, daß die Schraube auch für das Lösungsglühen induktiv erwärmt wird. Dadurch können die Prozeßzeiten für das Lösungsglühen in vorteilhafter Weise erheblich verkürzt werden.

Um besonders harte Gewindeflanken mit einer Härte >350 HV 0,3 zu erzielen, kann die Schraube ganz oder teilweise hartanodisiert, d.h. anodisch oxidiert werden. Dabei entsteht an der Oberfläche der Schraube eine harte Oxydschicht. Diese Oxydschichten können schließlich zusätzlich mit einer reibmindernden Imprägnierung, beispielsweise einer Teflonimprägnierung, versehen werden. Daraus ergeben sich die zuvor genannten Vorteile. Diese Vorteile lassen sich durch abschließendes Gleitbeschichten der Schrauben noch vergrößern. Die Gleitbeschichtung dient dazu, den Reibwert beim späteren Gewindeformen abzusenken. Dadurch wird ebenfalls die plastische Deformation der Gewindeflanken beim Gewindeformen reduziert.

Zu den bereits genannten Vorteilen der Schraube kommt hinzu, daß eine Schraube aus einer Aluminiumknetlegierung anstelle einer Stahlschraube auch einen Beitrag zur Gewichtseinsparung bei den verschraubten Bauteilen leistet.

Die beiden Verfahrensvarianten werden im folgenden ausführlich beschrieben, genauso Ausführungsvarianten erfindungsgemäßer Schrauben mit Hilfe von Figuren. Diese zeigen:
- Figur 1: eine selbstgewindeformende Schraube mit Linsenkopf;
- Figur 2: eine selbstgewindeformende Schraube mit Sechskantkopf und Formnuten;
- Figur 3: eine Bohrschraube;
- Figur 4: eine Bohrschraube mit fließlochformendem Schaftabschnitt;
- Figur 5: eine fließlochformende Bohrschraube mit Formnuten; und
- Figur 6: eine alternative fließlochformende Schraube ohne Formnuten.

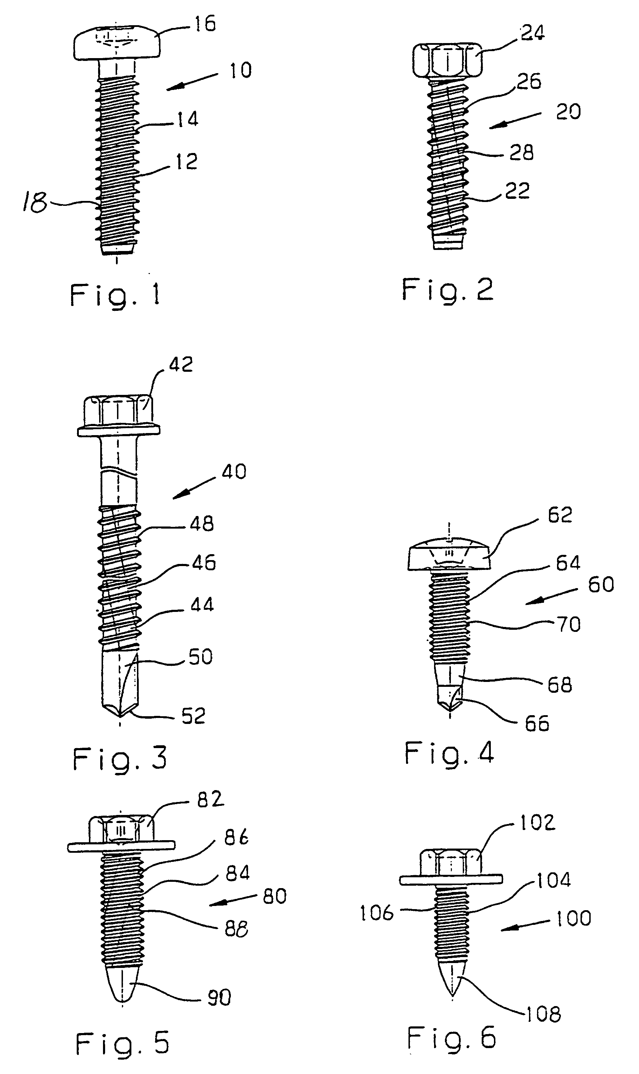

Die in den Figuren 1 bis 6 dargestellten Schrauben bestehen sämtlich aus Aluminium-Knet-Legierungen, deren Zusammensetzung in dem zuvor genannten Bereich liegt. Sämtliche Schrauben sind durch Lösungsglühen, Abschrecken und Warmauslagern warmausgehärtet und je nach Anforderungen abschließend oberflächenbehandelt.

Die selbstgewindeformende Schraube 10 aus Fig. 1 weist einen Schaft 12 auf, der mit einem Außengewinde 14 versehen und an einem Ende von einem Schraubenkopf 16 begrenzt ist. Die Oberfläche des Außengewindes 14 wird von dessen Gewindeflanken 18 gebildet. Beim Eindrehen der selbstgewindeformenden Schraube 10 in ein Werkstück werden vor allem die kopffernen Gewindeflanken 18 der Schraube 10 belastet, da diese die größte Formarbeit beim Gewindeformen leisten müsssen. In diesem Bereich ist die Schraube 10 derart wärmebehandelt, daß sie eine maximale Festigkeit besitzt. Sie kann dort oder insgesamt zusätzlich hartanodisiert, Teflon-imprägniert und gleitbeschichtet sein. In ihrem restlichen Teil ist die Schraube 10 so wärmebehandelt, daß sie dort eine maximale Korrosionsbeständigkeit aufweist. Das Werkstück, in das die Schraube 10 eingeschraubt wird, muß lediglich ein Loch aufweisen, jedoch kein Innengewinde, da dieses beim Einschrauben der Schraube 10 von dieser selbst geformt wird.

Genau wie die selbstgewindeformende Schraube 10 aus Fig. 1 umfaßt die selbstgewindeformende Schraube 20 aus Fig. 2 einen Schaft 22, der an einem Ende von einem Sechskantkopf 24 begrenzt ist. Der Schaft 22 ist mit einem Außengewinde 26 ausgestattet, das gegenüber demjenigen der Schraube 10 aus Fig. 1 zusätzlich Formnuten 28 aufweist. Diese unterstützen das Gewindeformen und werden von V-förmigen Kerben in den Flanken des Gewindes 26 gebildet, die in einer rechtwinklig zu den Gewindeflanken verlaufenden Formnut-Längsrichtung hintereinander ausgerichtet sind. Beim Einschrauben der Schraube 20 in ein vorgebohrtes Loch wird in diesem ein Innengewinde geformt, wie dies auch bei der Schraube 10 aus Fig. 1 der Fall ist. Bei der Schraube 20 wird dieser Vorgang jedoch durch die Formnuten 28 unterstützt. Auch die Schraube 20 ist zumindest im Bereich ihres kopffernen Schaftendes, welches die wesentliche Formarbeit beim Gewindeformen leistet, derart wärmebehandelt, daß sie dort eine maximale Festigkeit besitzt. Sie kann dort oder insgesamt zusätzlich hartanodisiert, Teflon-imprägniert und gleitbeschichtet sein. Der restliche Teil der Schraube 20 ist so wärmebehandelt, daß dieser Teil eine maximale Korrosionsbeständigkeit aufweist.

Fig. 3 zeigt eine Bohrschraube 40, die genau wie die Schraube 20 aus Fig. 2 einen von einem Kopf 42 begrenzten Schaft 44 aufweist, der mit einem mit Formnuten 46 ausgestatteten Außengewinde 48 versehen ist. Am kopffernen Ende besitzt der Schaft 44 eine Bohrspitze 50. Deren Schneiden 52 machen es möglich, daß sich die Schraube 40 beim Einschrauben in ein Werkstück ohne Loch ihr Loch selbst bohrt. In diesem selbstgebohrten Loch formt die Schraube 40 dann mit einem der Bohrspitze 50 nahen Abschnitt des Außengewindes 48 auf dem Schaft 44 selbst ein Gegengewinde. Zumindest die Bohrspitze 50 ist so wärmebehandelt, daß sie eine maximale Festigkeit besitzt. Sie kann auch aus einem anderen, härteren Material als der Aluminium-Knet-Legierung bestehen, aus dem die übrige Schraube besteht. Der Rest der Bohrschraube 40 ist so wärmebehandelt, daß er eine maximale Korrosionsbeständigkeit besitzt.

Bei der selbstgewindeformenden Schraube 60 in Fig. 4, die ebenfalls einen von einem Kopf 62 begrenzten Schaft 64 mit einer Bohrspitze 66 am kopffernen Schaftende aufweist, ist zusätzlich ein fließlochformender Schaftabschnitt 68 zwischen der Bohrspitze 66 und dem mit einem Außengewinde 70 versehenen Schaftabschnitt vorhanden. Beim Einschrauben der Schraube 60 in ein Werkstück ohne Loch bohrt sich die Schraube 60 mit ihrer Bohrspitze 66 zunächst ein Loch, welches dann von dem fließlochformenden Schaftabschnitt 68 unter Bildung eines Wulstes um das Bohrloch herum erweitert wird. Bei einer Durchgangsbohrung verlängert sich durch die Wulstbildung deren Länge. Im Verlaufe des weiteren Einschraubens der Schraube 60 formt diese sowohl im Bohrloch als auch im Wulst ein zum Außengewinde 70 der Schraube 60 kompatibles Innengewinde. Da sich dieses Innengewinde auch in dem gebildeten Wulst fortsetzt, hat es mehr tragende Windungen als dies der Fall wäre, wenn die Bohrung in dem Werkstück nur von einer Bohrspitze geschnitten und nicht durch Fließlochformen verlängert worden wäre. Auch die Schraube 60 ist so wärmebehandelt, daß die Bohrspitze 66 und gegebenenfalls der fließlochformende Schaftabschnitt 68 eine maximale Festigkeit besitzen und in anderen Teilabschnitten eine maximale Korrosionsbeständigkeit. Die Bohrspitze 60 kann außerdem aus einem anderen, härteren Material bestehen als die übrige Schraube.

In Fig. 5 ist eine Schraube 80 abgebildet, die wie die übrigen Schrauben einen Kopf 82 sowie einen Schaft 84 aufweist, der mit einem Außengewinde 86 versehen ist. Das Außengewinde 86 ist mit Formnuten 88 ausgestattet. Am kopffernen Ende des Schaftes 84 besitzt die Schraube 80 eine fließlochformende Spitze 90. Die Schraube 80 ist ähnlich differenziert wärmebehandelt wie die zuvor beschriebenen. Die fließlochformende Spitze 90 ist für den Einsatz in vorgebohrten Blechen geeignet. Beim Einschrauben der Schraube 80 in ein vorgebohrtes Werkstück erweitert die fließlochformende Spitze 90 das Bohrloch zunächst, indem es das Material des Werkstücks am Rande des Bohrloches verdrängt. Dabei entsteht um das Bohrloch herum ein Wulst, durch den die Länge des Bohrloches insgesamt verlängert wird. Anschließend formt das Gewinde 86 der Schraube 80 in dem durch den Wulst verlängerten Bohrloch ein kompatibles Innengewinde. Die Formnuten 88 unterstützen diesen Vorgang.

Die in Fig. 6 abgebildete Schraube 100 besitzt wie die übrigen einen Kopf 102 und einen Schaft 104, der mit einem Außengewinde 106 versehen ist. Die Schraube 100 ist wie die zuvor beschriebenen derart differenziert wärmebehandelt, daß sie im Bereich ihrer Spitze eine maximale Festigkeit und in den übrigen Bereichen eine maximale Korrosionsbeständigkeit besitzt. Das kopfferne Ende des Schaftes 104 ist als fließlochformende Spitze 108 ausgebildet. Im Gegensatz zu der fließlochformenden Spitze 90 der Schraube 80 aus Fig. 5 ist die fließlochformende Spitze 108 der Schraube 100 so ausgebildet, daß die Schraube 100 auch zum Verschrauben nicht vorgebohrter Bleche verwendet werden kann. Die fließlochformende Spitze 108 erzeugt dieses Loch vielmehr beim Eindrehen der Schraube, indem es das ursprünglich im Bereich des Loches befindliche Material umformt und zu einem Wulst um das Loch herum verdrängt. In dem Loch wird anschließend ein dem Außengewinde 106 der Schraube 100 entsprechendes Innengewinde geformt.

Anstelle der Formnuten 28 oder 88 mit ihren charakteristischen Kerben in den Gewindeflanken können die Schrauben 20 bzw. 80 Vorsprünge oder Höcker aufweisen, wie sie aus der deutschen Patentschrift 27 03 433 bekannt sind. Die Vorsprünge oder Höcker befinden sich da, wo sich ansonsten die Kerben der Formnuten 28 bzw. 88 befinden würden. Die Vorsprünge bzw. Höcker ragen über den Nenndurchmesser des Gewindes 26 bzw. 86 hinaus und sind so angeordnet, daß sich mehrere helixartig um den Schaft 22 bzw. 84 der Schraube 20 bzw. 80 umlaufende Linien ergeben, an denen die Vorsprünge oder Höcker ausgerichtet sind. Diese helixartig um den Schaft umlaufenden Linien haben eine Steigung, die wesentlich größer als die Steigung des jeweiligen Gewindes ist. Beim Eindrehen einer solchen mit Vorsprüngen oder Höckern versehenen Schraube in ein vorgebohrtes Loch in einem Werkstück ergibt sich ein Spielgewinde, wodurch das Gewindeformmoment wesentlich verringert wird.

Natürlich ist es möglich, die selbstgewindeformenden Schrauben auch mit anderen Geometrien zu versehen, die beim Eindrehen zu einem metrischen Gewinde in dem Werkstück führen.

Die Herstellung all der aufgeführten Schrauben kann auf die gleiche Weise erfolgen.

In einer ersten Verfahrensvariante wird der jeweiligen Schraube zunächst ihre Form gegeben, indem der Kopf der jeweiligen Schraube gepreßt wird und die Gewindegeometrie am Schaft entweder durch Walzen oder durch spanende Bearbeitung erzeugt wird. Anschließend wird die Schraube gebeizt und daraufhin lösungsgeglüht. Die Temperatur beim Lösungsglühen liegt zwischen 470°C und 520°C. Nach dem Lösungsglühen wird die Schraube in Wasserabgeschreckt. Anschließend wird sie in zwei Stufen warmausgelagert.

Die partielle Erwärmung zum Zweck der abschnittsweisen Warmauslagerung kann induktiv durchgeführt werden. Durch die induktive Erwärmung ist es möglich, die jeweiligen Verfahrensschritte bei anderen Temperaturen und insbesondere in wesentlich kürzerer Zeit durchzuführen. Insbesondere erlaubt es die induktive Erwärmung, die Wärmebehandlung einer Schraube während des Warmauslagerns so zu steuern, daß die Schraube im Bereich ihrer Spitze eine maximale Festigkeit erhält, auch wenn ihr Werkstoff dann dort eine größere Anfälligkeit für die interkristalline Korrosion besitzt, während der Rest der Schraube zum Erzielen einer maximalen Korrosionsbeständigkeit wärmebehandelt wird. Dazu wird die Wärmebehandlung der Schraube für deren verschiedene Teilabschnitte hinsichtlich Temperatur- und Zeitverlauf differenziert.

Um die Festigkeit und Härte der Schraube im Bereich der Gewindeflanken zu erhöhen, wird die Gewindegeometrie in einer zweiten Verfahrensvariante erst nach dem Warmaushärten entweder durch Walzen oder durch spanende Bearbeitung erzeugt. Die zweite Verfahrensvariante zeichnet sich also dadurch aus, daß zunächst nur die Kopfgeometrie der Schraube durch Pressen hergestellt wird. Anschließend wird die Schraube gebeizt und daraufhin durch Lösungsglühen, Abschrecken und Warmauslagern warmausgehärtet. Erst danach wird die Gewindegeometrie hergestellt.

Die dann folgende optionale Behandlung der Schraube ist bei beiden Verfahren dieselbe: Zunächst werden ihre Oberflächen insbesondere im Bereich der Gewindeflanken anodisch oxidiert. Dieser Verfahrensschritt ist auch als Eloxieren oder Hartanodisieren bekannt. Infolge der anodischen Oxidation bildet sich an der Oberfläche der Schraube eine besonders harte Oxidschicht, mit deren Hilfe die Härte der Gewindeflanken beispielsweise auf Werte über 350 HVO,3 getrieben werden kann. Auf die anodische Oxidation erfolgt sinnvollerweise eine reibmindernde Imprägnierung der entstandenen Oxidschicht. Dies kann beispielsweise mit Hilfe von Teflon geschehen. Abschließend werden die Schrauben mit einer Gleitbeschichtung versehen, um die Reibkraft beim Gewindeformen weiter abzusenken. Dies hat zur Folge, daß die plastische Deformation der Gewindeflanken beim späteren Gewindeformen während des Einschraubens der Schraube in ein Werkstück deutlich reduziert wird.

## Patentansprüche

1. Selbstgewindeformende Schraube (10, 20, 40, 60, 80, 100) aus einer warmaushärtbaren Leichtmetallegierung als Schraubenwerkstoff, deren Schaft (12, 22, 44, 64, 84, 104) ein Gewinde (14, 26, 48, 70, 86, 106) mit Gewindeflanken und an einem Ende eine gewindeformende sowie ggf. lochbildende Spitze aufweist, welche ein Gefüge besitzt, das dem Werkstoff eine besonders große Festigkeit verleiht, während der Schraubenwerkstoff ansonsten ein Gefüge besitzt, das ihm eine besonders hohe Korrosionsbeständigkeit verleiht.

2. Schraube nach Anspruch 1,
**dadurch gekennzeichnet, daß** der Schraubenwerkstoff zumindest teilweise eine Aluminium-Knet-Legierung ist, die neben Aluminium die folgenden Bestandteile in den angegebenen Konzentrationen enthält:
| | |
|---|---|
| Silizium | 0,1 bis 0,5% |
| Eisen | 0 bis 0,5% |
| Kupfer | 0,5 bis 2,5% |
| Mangan | 0,1 bis 0,4% |
| Magnesium | 2,0 bis 3,9% |
| Chrom | 0 bis 0,3% |
| Zink | 4,0 bis 8,5% |
| Titan | 0 bis 0,2% |
| Zirkonium | 0 bis 0,25%. |

3. Schraube nach Anspruch 1 oder 2, **dadurch gekennzeichnet, daß** zumindest die Gewindeflanken der Schraube (10, 20, 40, 60, 80, 100, 110) anodisch oxidiert sind und entsprechende Oxidschichten aufweisen.

4. Schraube nach Anspruch 3, **dadurch gekennzeichnet, daß** die Oxidschichten mit reibmindemden Imprägnierungen versehen sind.

5. Schraube nach Anspruch 4, **dadurch gekennzeichnet, daß** die Oxidschichten mit Tetrafluorethylen (Teflon®) imprägniert sind.

6. Schraube nach einem der Ansprüche 1 bis 5, **dadurch gekennzeichnet, daß** zumindest die Gewindeflanken der Schraube gleitbeschichtet sind.

7. Verfahren zum Herstellen einer Schraube nach einem der vorhergehenden Ansprüche, mit den folgenden Verfahrensschritten:
- Formgebung der Schraube durch Walzen oder spanendes Erzeugen der Gewindegeometrie,
- Lösungsglühen der Schraube,
- Abschrecken der Schraube in Wasser und
- Warmauslagem der Schraube,
**dadurch gekennzeichnet, daß** die Schraube beim Warmauslagem im Bereich ihres schraubenkopffernen Endes derart wärmebehandelt wird, daß sich eine maximale Gefügehärte ergibt und im Übrigen derart wärmebehandelt wird, daß sich eine maximale Korrosionsbeständigkeit ergibt.

8. Verfahren zum Herstellen einer Schraube nach einem der Ansprüche 1 - 6, mit den folgenden Verfahrensschritten:
- Formgebung der Schraube durch Walzen oder spanendes Erzeugen der Gewindegeometrie,
- Lösungsglühen der Schraube,
- Abschrecken der Schraube in Wasser und
- Warmauslagem der Schraube,
**dadurch gekennzeichnet, daß** die Gewindegeometrie erst nach dem Warmauslagern durch Walzen oder spanende Bearbeitung erzeugt wird.

9. Verfahren nach Anspruch 7, oder 8,
**dadurch gekennzeichnet, daß** die Schraube zum Warmauslagern induktiv erwärmt wird.

10. Verfahren nach Anspruch 7,
**dadurch gekennzeichnet, daß** der Verfahrensschritt der Formgebung das Pressen einer Kopfgeometrie vor dem Walzen oder spanenden Erzeugen der Gewindegeometrie einschließt.

11. Verfahren nach Anspruch 7,
**dadurch gekennzeichnet, daß** die Schraube zwischen den Verfahrensschritten der Formgebung und des Lösungsglühens in einem weiteren Verfahrensschritt gebeizt wird.

12. Verfahren nach einem der Ansprüche 7 bis 11,
**dadurch gekennzeichnet, daß** das Lösungsglühen bei einer Temperatur zwischen 460°C und 520°C durchgeführt wird.

13. Verfahren nach Anspruch 12,
**dadurch gekennzeichnet, daß** das Lösungsglühen bei einer Temperatur zwischen 470°C und 480°C durchgeführt wird.

14. Verfahren nach einem der Ansprüche 7 bis 13,
**gekennzeichnet durch** einen Verfahrensschritt Hartanodisieren, der sich an die in den Ansprüchen 7 bis 13 genannten Verfahrensschritte anschließt und bei dem mittels anodischer Oxidation zumindest im Bereich der Gewindeflanke eine Oxidschicht erzeugt wird.

15. Verfahren nach Anspruch 14, bei dem die beim Hartanodisieren erzeugte Oxidschicht in einem weiteren Verfahrensschritt mit einer reibmindernden Imprägnierung versehen wird.

16. Verfahren nach Anspruch 15, bei dem die Oxidschicht mit Tetrafluorethylen (Teflon®) reibmindemd imprägniert wird.

17. Verfahren nach einem der Ansprüche 7 bis 16,
**gekennzeichnet durch** einen abschließenden Verfahrensschritt Gleitbeschichten, bei dem die Schraube mit einer Gleitbeschichtung versehen wird.

## Claims

1. Self-tapping screw (10, 20, 40, 60, 80, 100) made from a hot age-hardenable light metal alloy as screw material, the shank (12, 22, 44, 64, 84, 104) of which has a screw thread (14, 26, 48, 70, 86, 106) with thread flanks and, at one end, has a thread-forming and if appropriate hole-forming tip which has a microstructure which imparts a particularly high strength to the material, whereas otherwise the screw material has a microstructure which imparts a particularly high corrosion resistance to it.

2. Screw according to Claim 1, **characterized in that** the screw material is at least in part a wrought aluminium alloy, which in addition to aluminium contains the following constituents, in the concentrations indicated:
| | |
|---|---|
| Silicon | 0.1 to 0.5% |
| Iron | 0 to 0.5% |
| Copper | 0.5 to 2.5% |
| Manganese | 0.1 to 0.4% |
| Magnesium | 2.0 to 3.9% |
| Chromium | 0 to 0.3% |
| Zinc | 4.0 to 8.5% |
| Titanium | 0 to 0.2% |
| Zirconium | 0 to 0.25%. |

3. Screw according to Claim 1 or 2, **characterized in that** at least the thread flanks of the screw (10, 20, 40, 60, 80, 100, 110) are anodically oxidized and have corresponding oxide layers.

4. Screw according to Claim 3, **characterized in that** the oxide layers are provided with friction-reducing impregnations.

5. Screw according to Claim 4, **characterized in that** the oxide layers are impregnated with tetrafluoroethylene (Teflon®).

6. Screw according to one of Claims 1 to 5, **characterized in that** at least the thread flanks of the screw are provided with a slide coating.

7. Process for producing a screw according to one of the preceding claims, comprising the following process steps:
- shaping of the screw by rolling or material-removing production of the thread geometry,
- solution annealing of the screw,
- quenching of the screw in water, and
- artificial aging of the screw,
**characterized in that** the screw, during the artificial aging, is heat-treated in the region of its end which is remote from the screw head in such a manner that a maximum microstructural hardness results, and otherwise is heat-treated in such a manner that a maximum corrosion resistance results.

8. Process for producing a screw according to one of Claims 1-6, comprising the following process steps:
- shaping of the screw by rolling or material-removing production of the thread geometry,
- solution annealing of the screw,
- quenching of the screw in water, and
- artificial aging of the screw,
**characterized in that** the thread geometry is only produced by rolling or material-removing machining after the artificial aging has taken place.

9. Process according to Claim 7 or 8, **characterized in that** the screw is inductively heated in order to be artificially aged.

10. Process according to Claim 7, **characterized in that** the shaping process step includes the pressing of a head geometry prior to the rolling or material-removing production of the thread geometry.

11. Process according to Claim 7, **characterized in that** the screw is pickled in a further process step between the process steps of shaping and solution annealing.

12. Process according to one of Claims 7 to 11, **characterized in that** the solution annealing is carried out at a temperature of between 460°C and 520°C.

13. Process according to Claim 12, **characterized in that** the solution annealing is carried out at a temperature of between 470°C and 480°C.

14. Process according to one of Claims 7 to 13, **characterized by** a process step of hard-anodizing, which follows the process steps mentioned in Claims 7 to 13 and in which an oxide layer is produced at least in the region of the thread flank by means of anodic oxidation.

15. Process according to Claim 14, in which the oxide layer produced during the hard-anodizing is provided with a friction-reducing impregnation in a further process step.

16. Process according to Claim 15, in which the oxide layer is provided with a friction-reducing impregnation of tetrafluoroethylene (Teflon®).

17. Process according to one of Claims 7 to 16, **characterized by** a final process step of slide-coating, in which the screw is provided with a slide coating.

## Revendications

1. Vis autotaraudeuse (10, 20, 40, 60, 80, 100) à vieillissement accéléré comme matériau de boulonnerie et de visserie, dont la tige (12, 22, 44, 64, 84, 104) comporte un filetage (14, 26, 48, 70, 86, 106) avec des flancs de filets et comporte, au niveau d'une extrémité, une pointe autotaraudeuse comme ; le cas échéant, une pointe formant des trous, laquelle comporte une structure qui donne au matériau une résistance particulièrement grande pendant que le matériau de boulonnerie et de visserie présente autrement une structure qui lui donne une résistance à la corrosion particulièrement grande.

2. Vis selon la revendication 1, **caractérisée en ce que** le matériau de boulonnerie et de visserie est au moins en partie un alliage corroyé d'aluminium qui, outre l'aluminium, comporte les composants suivants dans les concentrations indiquées :
Silicium : 0,1 à 0,5 %
Fer : 0 à 0,5 %
Cuivre : 0,5 à 2,5 %
Manganèse : 0,1 à 0,4 %
Magnésium : 2 à 3,9 %
Chrome : 0 à 0,3 %
Zinc : 4 à 8,5 %
Titane : 0 à 0,2 %
Zirconium : 0 à 0,25 %

3. Vis selon la revendication 1 ou 2, **caractérisée en ce que** les flancs de filets de la vis (10, 20, 40, 60, 80, 100, 110) sont au moins oxydés de façon anodique et comportent des couches d'oxyde correspondantes.

4. Vis selon la revendication 3, **caractérisée en ce que** les couches d'oxyde sont prévues avec des imprégnations diminuant les frottements.

5. Vis selon la revendication 4, **caractérisée en ce que** les couches d'oxyde sont imprégnées de tétrafluoréthylène (Teflon®).

6. Vis selon l'une quelconque des revendications 1 à 5, **caractérisée en ce que** les flancs de filets de la vis sont au moins recouverts de façon à glisser.

7. Procédé de fabrication d'une vis selon l'une quelconque des revendications précédentes, avec les étapes de procédé suivantes :
- façonnage de la vis par laminage ou génération de la géométrie de filetage par enlèvement de copeaux,
- traitement thermique de mise en solution de la vis,
- trempe de la vis dans l'eau et
- vieillissement accéléré de la vis,
**caractérisé en ce que** la vis est traitée à chaud lors du vieillissement accéléré dans la zone de son extrémité de tête de vis, de sorte qu'il en résulte une dureté maximale de la structure et, par ailleurs, qu'elle est traitée à chaud, de sorte qu'il en résulte une résistance maximale à la corrosion.

8. Procédé de fabrication d'une vis selon l'une quelconque des revendications 1 à 6, avec les étapes de procédé suivantes :
- façonnage de la vis par laminage ou génération de la géométrie de filetage par enlèvement de copeaux,
- traitement thermique de mise en solution de la vis,
- trempe de la vis dans l'eau et
- vieillissement accéléré de la vis,
**caractérisé en ce que** la géométrie de filetage est d'abord générée après le vieillissement accéléré par laminage ou traitement par enlèvement de copeaux.

9. Procédé selon la revendication 7 ou 8, **caractérisé en ce que** la vis est chauffée de façon inductive pour le vieillissement accéléré.

10. Procédé selon la revendication 7, **caractérisé en ce que** l'étape du procédé de façonnage comprend le pressage d'une géométrie de tête avant le laminage ou la génération de la géométrie de filetage par enlèvement de copeaux.

11. Procédé selon la revendication 7, **caractérisé en ce que** la vis est corrodée entre les étapes du procédé de façonnage et de traitement thermique de mise en solution dans une autre étape du procédé.

12. Procédé selon l'une quelconque des revendications 7 à 11, **caractérisé en ce que** le traitement thermique de mise en solution est réalisé par une température comprise entre 460°C et 520°C.

13. Procédé selon la revendication 12, **caractérisé en ce que** le traitement thermique de mise en solution est réalisé par une température comprise entre 470°C et 480°C.

14. Procédé selon l'une quelconque des revendications 7 à 13, **caractérisé par** une étape du procédé consistant à anodiser, qui se raccorde aux étapes du procédé mentionnées dans les revendications 7 à 13 et lors de laquelle une couche d'oxyde est produite au moyen d'une oxydation anodique au moins dans la zone des flancs de filetage.

15. Procédé selon la revendication 14, lors duquel la couche d'oxyde produite lors de l'anodisation est prévue dans une autre étape du procédé avec une imprégnation diminuant les frottements.

16. Procédé selon la revendication 15, lors duquel la couche d'oxyde est imprégnée de tétrafluoréthylène (Teflon®) de façon à diminuer les frottements.

17. Procédé selon l'une quelconque des revendications 7 à 16, **caractérisé par** une dernière étape du procédé consistant à mettre un revêtement glissant, lors de laquelle la vis est prévue avec un revêtement glissant.
